Europäisches Patentamt

European Patent Office

Office européen des brevets

(19)

(11) Numéro de publication : **0 114 558**
**B1**

(12) **FASCICULE DE BREVET EUROPÉEN**

(45) Date de publication du fascicule du brevet :
06.05.87

(51) Int. Cl.⁴ : **H 04 M   1/60**, H 04 M   1/76

(21) Numéro de dépôt : 83402486.1

(22) Date de dépôt : 20.12.83

(54) **Circuit de suppression de signal de microphone pour poste téléphonique.**

(30) Priorité : 28.12.82 FR 8221865

(43) Date de publication de la demande :
01.08.84 Bulletin 84/31

(45) Mention de la délivrance du brevet :
06.05.87 Bulletin 87/19

(84) Etats contractants désignés :
DE FR GB NL SE

(56) Documents cités :
FR-A- 2 161 662
GB-A- 1 525 057
US-A- 3 745 261

(73) Titulaire : **THOMSON-CSF**
**173, Boulevard Haussmann**
**F-75379 Paris Cedex 08 (FR)**

(72) Inventeur : **Kaire, Jean-Claude**
**THOMSON-CSF SCPI 173, bld Haussmann**
**F-75379 Paris Cedex 08 (FR)**

(74) Mandataire : **Guérin, Michel et al**
**THOMSON-CSF SCPI 19, avenue de Messine**
**F-75008 Paris (FR)**

Jouve, 18, rue St-Denis, 75001 Paris, France

## Description

Un poste téléphonique classique est raccordé à une ligne téléphonique à deux conducteurs qui véhicule sur ces deux conducteurs un signal composite comprenant à la fois un signal émis et un signal reçu par le poste.

Pour entendre dans un écouteur la voix du correspondant (signal reçu), l'écouteur doit être relié à la ligne. Mais, s'il est relié directement, on entendra dans l'écouteur le signal composite, donc non seulement le signal reçu mais aussi le signal émis. Ainsi, l'utilisateur du poste s'entend parler dans l'écouteur, ce qui est gênant. De plus, il existe un risque d'effet « larsen » entre le microphone et l'écouteur. On prévoit donc toujours un circuit dit « antilocal », qui est un circuit de suppression de signal de microphone, recevant le signal émis (signal de microphone) et le signal composite présent sur la ligne pour retrancher le premier du second et obtenir un signal qui est essentiellement le signal reçu et qui peut être envoyé vers l'écouteur.

A priori, le circuit de suppression comprend donc essentiellement un soustracteur recevant le signal composite sur la ligne et le signal issu du microphone.

En fait, il faut prévoir aussi des adaptations d'impédance pour que la soustraction effectuée se fasse sur des signaux circulant dans des impédances équivalentes, faute de quoi les réflexions engendrées détérioreraient la qualité de la soustraction.

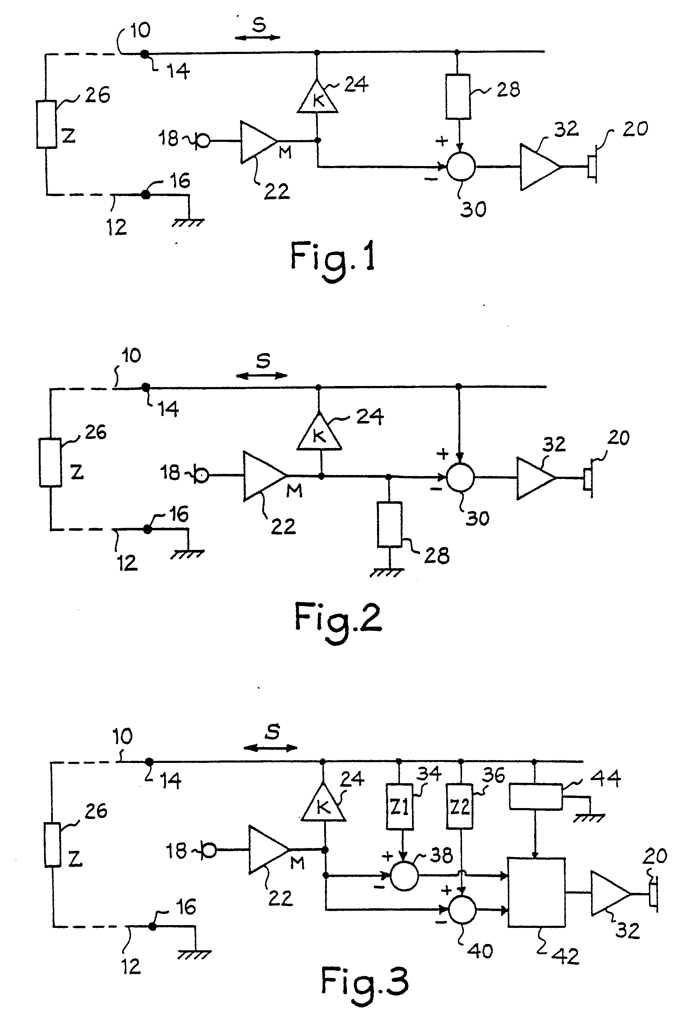

Deux exemples de circuits classiques de suppression de signal de microphone sont représentés respectivement aux figures 1 et 2.

A la figure 1, la ligne téléphonique est représentée par deux conducteurs 10 et 12 arrivant sur deux bornes 14 et 16 du poste. La borne 16 est considérée comme une borne de masse.

Le microphone du combiné du poste est désigné par la référence 18 et l'écouteur par la référence 20. Le microphone est connecté à l'entrée d'un amplificateur 22 qui fournit un signal de microphone M.

Ce signal de microphone est appliqué à la ligne téléphonique par un amplificateur 24 pouvant avoir un gain K. Le signal composite S présent sur le conducteur 16 comprend une combinaison du signal de microphone et d'un signal reçu et destiné à être entendu à travers l'écouteur 20.

L'impédance de la ligne téléphonique est représentée symboliquement par une impédance de terminaison 26 connectée en bout de ligne. Sa valeur est Z.

Le circuit de suppression de signal de microphone tient compte de cette impédance et comprend à la figure 1 une impédance de compensation 28 connectée entre la borne 14 recevant la ligne téléphonique et une entrée positive d'un soustracteur 30 dont une entrée négative reçoit par ailleurs le signal de microphone M et dont la sortie attaque un amplificateur 32 relié à l'écouteur 20.

L'impédance de compensation a une constitution (réseau de résistances et capacités) tenant compte de la valeur de l'impédance Z de la ligne ainsi que du gain K de l'amplificateur 24 de sortie vers la ligne.

La figure 2 représente une variance de réalisation dans laquelle les mêmes éléments sont désignés par les mêmes références. La seule différence est que l'entrée positive du soustracteur 30 est raccordée directement, et non par l'intermédiaire d'une impédance de compensation, au conducteur 10 de la ligne téléphonique (borne 14). L'impédance de compensation 28 (qui n'a d'ailleurs pas la même constitution qu'à la figure 1) est placée en sortie de l'amplificateur 22 du microphone, entre cette sortie et la deuxième borne 16 (masse) de la ligne téléphonique.

D'autres montages peuvent encore être prévus (montages en pont par exemple).

Ces montages présentent tous un inconvénient important : le bon fonctionnement du circuit de suppression exige une adaptation précise entre la valeur de l'impédance de compensation et la valeur de l'impédance de ligne. Or, l'impédance de ligne varie fortement avec la longueur de la ligne et le type de la ligne (diamètre, etc.). Il faudrait donc ajuster ou modifier l'impédance de compensation pour l'adapter individuellement à chaque poste en fonction de sa situation géographique par rapport à un central téléphonique. Ceci entraîne évidemment des coûts de fabrication supplémentaires (éléments réglables) et des coûts d'installation plus élevés (réglage à effectuer lors de l'installation).

On préfère donc mettre une valeur d'impédance correspondant à une ligne de longueur moyenne, mais les résultats sont très imparfaits.

On a proposé aussi de prévoir que l'impédance de compensation est commutable entre deux valeurs, l'une correspondant à des lignes plutôt courtes et l'autre correspondant à des lignes plutôt longues, la commutation s'effectuant automatiquement à partir d'une mesure du courant continu et/ou de la tension continue présente sur la ligne téléphonique, car ce courant ou cette tension peuvent en effet être une bonne indication de l'impédance de la ligne. Le brevet britannique GB 1 525 057 en montre un exemple appliqué à la transmission téléphonique numérique.

Cette commutation entre deux valeurs d'impédance donne encore des résultats très imparfaits ; pour les améliorer, il faudrait prévoir une commutation beaucoup plus fine entre de nombreuses valeurs d'impédance possibles. Ceci alourdirait considérablement les circuits du poste téléphonique. On pourrait aussi imaginer de construire une impédance variable continûment (résistance variable, diode à capacité variable) en fonction d'un signal électrique, avec les difficultés de conception et de réalisation que cela entraînerait.

La présente invention propose une solution simple pour améliorer les circuits de suppression de signal de microphone, cette solution n'impliquant pas la réalisation de circuits complexes et encombrants.

La demanderesse a remarqué qu'il n'était pas nécessaire de disposer d'un grand nombre d'impédances de compensation différentes, à commuter pour choisir une valeur désirée, mais que l'on peut faire passer un signal indépendamment à travers deux impédances de compensation différentes, et mélanger les signaux qui en résultent avec des proportions variables (de 0 à 100 %) ; on constate alors que le résultat est sensiblement équivalent à ce qu'on obtiendrait en faisant passer le signal dans une impédance de valeur intermédiaire entre les valeurs des deux impédances, cette valeur intermédiaire variant directement en fonction des proportions du mélange de signaux.

Dans ces conditions, on peut choisir comme impédances de compensation les valeurs nécessaires pour l'adaptation à la ligne la plus courte et à la ligne la plus longue (et non à une valeur moyenne de ligne « courte » et une valeur moyenne de ligne « longue »). Les proportions du mélange seront commandées directement entre 0 et 100 % par une information telle que le courant continu ou la tension continue sur la ligne, cette information étant une indication approximative mais efficace de la longueur et de l'impédance de la ligne.

De manière plus précise, l'invention propose un circuit de suppression de signal de microphone, pour un poste téléphonique comprenant un amplificateur de microphone fournissant un signal de microphone vers un amplificateur de ligne qui émet ce signal sur une ligne téléphonique, un amplificateur d'écouteur fournissant un signal à un écouteur, un circuit de suppression de signal de microphone recevant d'une part le signal de microphone et d'autre part un signal composite provenant de la ligne, pour fournir à l'écouteur du poste un signal correspondant essentiellement au signal composite dont on a retranché le signal de microphone et deux impédances de compensation différentes destinées à effectuer l'une une adaptation d'impédance pour une ligne téléphonique courte et l'autre une adaptation pour une ligne téléphonique longue, caractérisé en ce qu'il comporte :

un mélangeur de signaux relié aux deux impédances de compensation pour mélanger des signaux modifiés par ces deux impédances avec des proportions variables commandées,

un circuit de commande recevant un signal représentatif de l'impédance de la ligne téléphonique, pour contrôler les proportions du mélange des deux signaux en fonction de l'impédance de la ligne,

et un moyen d'addition ou soustraction recevant le signal composite et le signal de microphone, l'un des deux au moins étant modifié par chacune des impédances de compensation.

D'autres caractéristiques et avantages de l'invention apparaîtront à la lecture de la description détaillée qui suit et qui est faite en référence aux dessins annexés dans lesquels :

les figures 1 et 2 déjà décrites montrent deux exemples de circuits de suppression de signal émis de l'art antérieur,

la figure 3 représente un schéma bloc conforme à l'invention,

la figure 4 représente un autre exemple de schéma bloc possible de l'invention,

la figure 5 représente un troisième exemple de schéma bloc possible de l'invention,

la figure 6 représente un exemple de réalisation détaillée de l'invention.

Dans tout ce qui suit, on comprendra que les fonctions essentielles du circuit selon l'invention (impédances, mélangeur, soustracteur) sont des fonctions globales présentes dans le circuit, même si, pour des raisons d'optimisation de conception, ces fonctions sont intimement mélangées. Ainsi, la fonction de soustraction peut être accomplie par un additionneur précédé sur une entrée par un inverseur ; cette fonction de soustraction (ou d'addition) peut d'ailleurs être incorporée au mélangeur, ou encore être placée soit avant soit après le mélangeur.

De plus, il faut comprendre que l'on peut utiliser indifféremment les notions de moyen de soustraction ou de moyen d'addition : on cherche effectivement à soustraire le signal émis du signal composite ; mais, si par exemple l'amplificateur de ligne 24 des différentes figures inverse le signal qu'il amplifie, la fonction de soustraction devra être remplacée par une fonction d'addition. On peut généraliser cette fonction par le terme de fonction d'addition signée.

Le schéma de la figure 3 montre un exemple de schéma bloc de circuit selon l'invention. Les éléments identiques à ceux des figures 1 et 2 sont numérotés de la même manière et ne seront pas redécrits : conducteurs de ligne 10 et 12, bornes correspondantes 14 et 16 du poste, microphone 18, amplificateur de microphone 22, écouteur 20, amplificateur de ligne 24, amplificateur d'écouteur 32, impédance équivalente 26 de la ligne.

Deux impédances de compensation 34 et 36 sont prévues. L'une, 34, correspond à la compensation d'une ligne ayant la longueur la plus courte envisagée. Elle est connectée entre la borne 14 d'extrémité de ligne téléphonique et une entrée positive d'un soustracteur 38 dont une entrée négative est par ailleurs reliée à la sortie de l'amplificateur de microphone 22 et reçoit donc le signal de microphone. L'autre impédance de compensation, 36, correspond à la compensation d'une ligne ayant la longueur la plus longue envisagée. Elle est connectée entre la borne 14 d'extrémité de ligne téléphonique et une entrée positive d'un autre soustracteur 40 dont une entrée négative est par ailleurs reliée à la sortie de l'amplificateur de microphone 22.

Les sorties des soustracteurs 38 et 40 sont reliées à un mélangeur 42 qui a pour fonction de délivrer à sa sortie un signal proportionnel à un mélange des deux signaux d'entrée, la proportion du mélange pouvant être commandée par un signal issu d'un circuit de commande 44.

Le circuit de commande 44 établit un signal à partir d'une information électrique de tension ou de courant continu présente sur la ligne téléphonique, de telle sorte que les proportions du mélange de signaux soient directement fonction d'une grandeur sensiblement représentative de l'impédance Z de la ligne.

On peut notamment prévoir que les proportions du mélange varient entre 0 et 100 % de manière sensiblement linéaire par rapport aux variations de courant continu sur la ligne.

La sortie du mélangeur est appliquée à l'entrée de l'amplificateur 32 de l'écouteur 20.

Ainsi, dans cet exemple, le mélangeur 42 mélange deux signaux modifiés chacun par l'une des impédances de compensation. Quant au moyen de soustraction, il comprend deux soustracteurs recevant des signaux modifiés chacun par l'une des impédances de compensation.

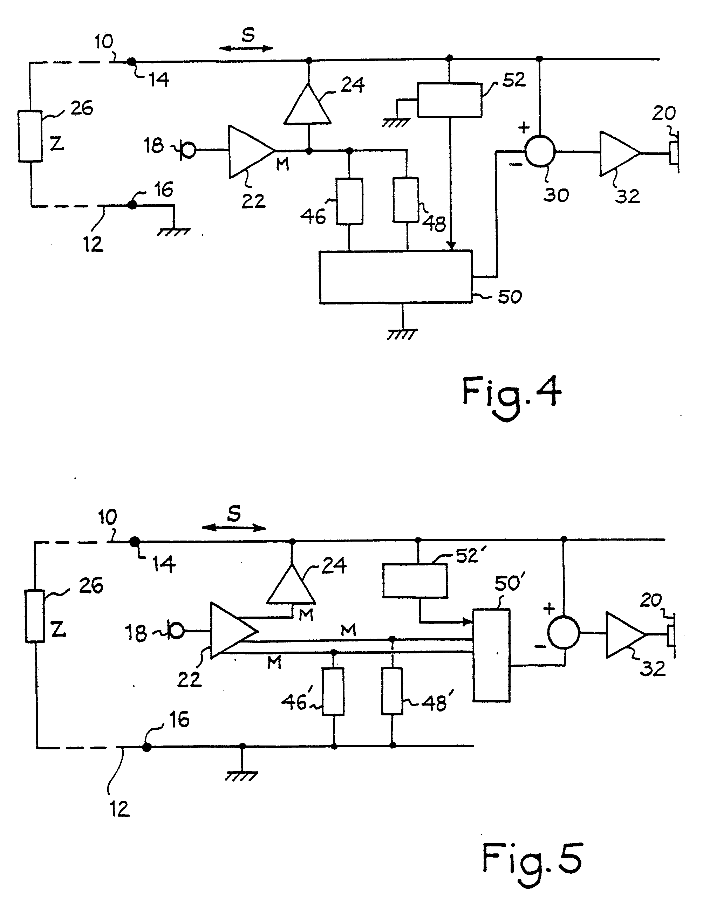

Dans une autre configuration, représentée à la figure 4, le circuit selon l'invention peut comprendre deux impédances de compensation disposées différemment. La configuration de la figure 4 se rapproche du schéma de la figure 2 (impédance de compensation reliée à la sortie de l'amplificateur de microphone), de même que la configuration de la figure 3 se rapproche du schéma de la figure 1 (impédance de compensation reliée à la ligne téléphonique).

Sur la figure 4, les éléments suivants sont les mêmes qu'aux figures précédentes : conducteurs de ligne 10, 12 ; bornes 14 et 16 ; microphone 18 et écouteur 20 ; amplificateur de microphone 22 et amplificateur de ligne 24 ; impédance équivalente de ligne 26 ; amplificateur d'écouteur 32.

Deux impédances de compensation 46 et 48 sont prévues. L'une, 46, correspond à la compensation de la ligne téléphonique la plus courte envisagée ; elle est connectée entre la sortie de l'amplificateur 22 du microphone et une première entrée d'un mélangeur 50. L'autre, 48, correspond à la compensation de la ligne téléphonique la plus longue envisagée ; elle est connectée entre la sortie de l'amplificateur 22 du microphone et une seconde entrée du mélangeur 50.

Le mélangeur 50 a la même fonction que le mélangeur 42 de la figure 3. Les proportions du mélange sont commandées par un circuit de commande 52 qui a la même fonction que le circuit 44 de la figure 3 et qui peut être réalisé de la même manière.

La sortie du mélangeur 50 est appliquée à une entrée négative d'un soustracteur 30 dont une entrée positive est reliée à la borne 14 d'arrivée de la ligne téléphonique. La sortie du soustracteur fournit à l'amplificateur 32 de l'écouteur 20 le signal qui doit être reçu par l'écouteur.

Ici, le moyen de soustraction reçoit le signal de microphone modifié par les deux impédances de compensation, mais après passage dans le mélangeur.

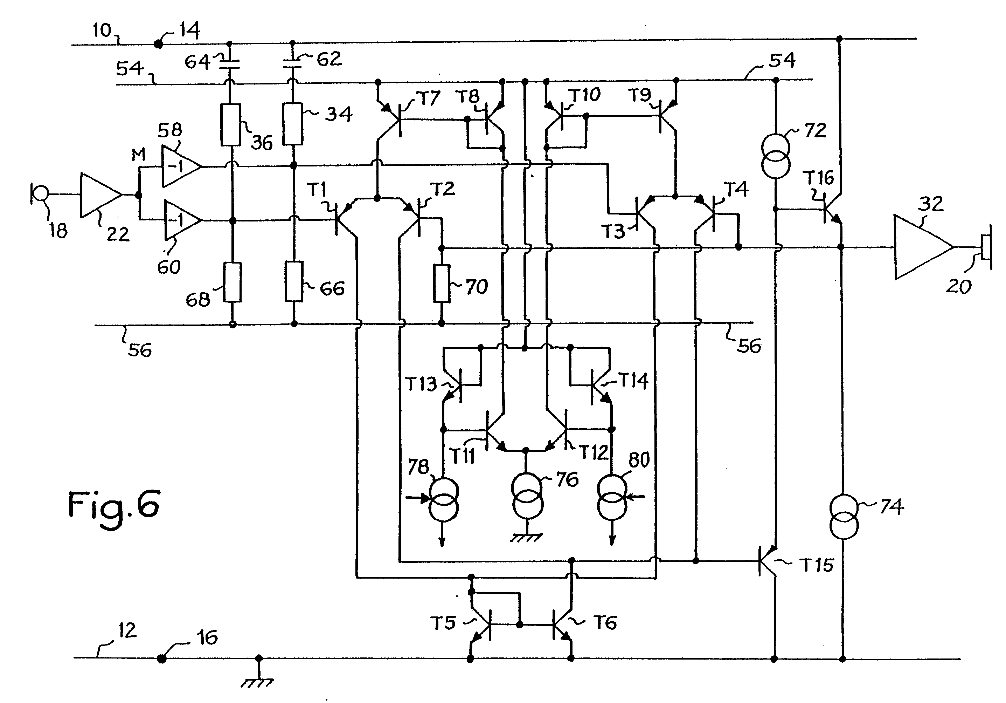

Un troisième exemple de réalisation est représenté à la figure 5. Dans cet exemple, on suppose que l'amplificateur de microphone 22 a deux sorties indépendantes fournissant chacune le même signal M sous forme d'un courant. Ces sorties sont reliées chacune à une entrée d'un mélangeur 50' et également chacune à une extrémité d'une impédance de compensation respective 46' (ligne courte) et 48' (ligne longue) reliées par ailleurs à la borne de masse 16. La sortie du mélangeur 50' est reliée à une entrée d'un soustracteur 30 dont l'autre entrée est reliée à la ligne téléphonique (borne 14) et dont la sortie est reliée à l'amplificateur 32 de l'écouteur. Un circuit de commande 52' règle les proportions du mélange comme aux figures 3 et 4.

Les possibilités de réalisation des diverses fonctions élémentaires des circuits des figures 3, 4 et 5 sont multiples et on ne va en donner qu'un seul exemple détaillé particulièrement intéressant qui est représenté à la figure 6 et qui correspond essentiellement au schéma bloc de la figure 3.

Sur le circuit de la figure 6, on a désigné encore par 10 et 12 les conducteurs de la ligne téléphonique, par 14 et 16 les bornes correspondantes du poste, par 18 le microphone, par 22 l'amplificateur de microphone, par 32 l'amplificateur d'écouteur et par 20 l'écouteur lui-même. Les deux impédances de compensation sont encore désignées par 34 (ligne courte) et 36 (ligne longue). L'amplificateur de ligne, supposé non inverseur, n'est pas représenté. Chaque impédance de compensation peut être réalisée par une résistance en série avec un ensemble en parallèle d'une résistance et une capacité.

Tous les autres éléments de la figure 6 servent à réaliser les diverses fonctions des éléments 38, 40, 42, 44 de la figure 3 (soustraction, mélange, commande des proportions du mélange).

Le circuit de la figure 6 utilise des tensions continues de référence établies (par des moyens non représentés) sur des conducteurs 54 (environ 2,5 volts) et 56 (environ 1,2 volt), la masse étant supposée être reliée à la borne 16. Toutefois, la tension sur le conducteur 54 est purement continue, obtenue par exemple aux bornes d'une capacité réservoir, tandis que la ligne 56 définit une tension de référence moyenne qui ne court-circuite pas les signaux alternatifs qui peuvent y passer.

Le circuit comprend essentiellement un premier étage différentiel composé essentiellement de deux transistors PNP T1 et T2, et un deuxième étage différentiel composé de deux transistors PNP T3 et T4, ces deux étages étant reliés à un étage de polarisation commun composé de deux transistors NPN T5 et T6 agencés en miroirs de courant. Le premier étage différentiel est alimenté en courant à travers un transistor PNP T7 qui recopie le courant d'un transistor PNP T8 et le deuxième étage différentiel est alimenté en courant à travers un transistor PNP T9 qui recopie le courant d'un transistor PNP T10.

Un troisième étage différentiel à quatre transistors NPN T11, T12, T13, T14 sert à déséquilibrer les courants dans les transistors T8 et T10 (qui constituent les charges de ce troisième étage) pour régler les proportions du mélange de signaux arrivant dans l'étage de polarisation par chacun des deux premiers étages différentiels.

Enfin, un étage de sortie, prélevant des signaux de l'étage de polarisation commun, fournit à l'amplificateur d'écouteur le signal voulu. L'étage de sortie comprend un transistor d'attaque PNP T15 et un transistor NPN T16.

L'entrée sur chaque étage différentiel se fait sur la base de l'un des transistors (T1 ou T3 respectivement) constituant cet étage, tandis que la base de l'autre transistor (T2 ou T4) est reliée à la sortie de l'étage de sortie (émetteur du transistor T16) en tant que contre réaction donnant un gain fixe unitaire à l'ensemble du circuit.

Les étages différentiels ne sont pas utilisés comme soustracteurs, mais chacun comme additionneur (l'addition se faisant à l'entrée de l'étage, sur la base du transistor T1 ou T3). Il faut donc prévoir une inversion du signal du microphone ou de la ligne avant cette addition (sauf si l'amplificateur 24 est lui-même inverseur).

On a prévu à cet effet, en sortie de l'amplificateur de microphone 22, deux étages 58 et 60 inverseurs et adaptateurs d'impédance dont les sorties sont reliées respectivement à la base du transistor T1 et à la base du transistor T3 (donc aux entrées du premier et du deuxième étage différentiel).

Par ailleurs, les impédances de compensation 36 et 34 sont aussi reliées respectivement à la base du transistor T1 et à la base du transistor T3.

C'est sur ces bases que s'effectue l'addition des signaux en provenance d'une part du microphone et d'autre part de la ligne téléphonique à travers les impédances 34 ou 36.

L'autre extrémité des impédances 34 et 36 est reliée, à travers des condensateurs 62 et 64 respectivement qui empêchent le passage dans ces impédances d'un courant continu, à la borne 14 du poste.

Les bases des transistors T1 et T3 sont reliées par des résistances respectives 66 et 68 au conducteur 56. Les résistances 66 et 68 servent à transformer en variations de tension les variations de courant à travers les impédances 34 et 36. C'est dans ces résistances que s'effectue la sommation de signaux aux entrées des premier et second étages différentiels.

Les bases des transistors T2 et T4 sont reliés au conducteur 56 par une résistance de polarisation 70.

Les transistors T1 et T2 ont leurs émetteurs réunis et reliés au collecteur du transistor T7 dont l'émetteur est relié au conducteur 54, formant ainsi un étage différentiel classique. Il en est de même pour les transistors T3 et T4 dont les émetteurs sont reliés au collecteur du transistor T9, l'émetteur de celui-ci étant relié au conducteur 54.

Les collecteurs des transistors T1 et T3 sont reliés au collecteur du transistor T5 qui est monté en diode (collecteur et base réunis), l'émetteur du transistor T5 étant à la masse (borne 16).

Les collecteurs des transistors T2 et T4 sont reliés au collecteur du transistor T6 qui est monté en transistor de recopie du courant dans le transistor T5 (émetteurs reliés et bases reliées).

Les transistors T5 et T6 forment l'étage de polarisation commun aux étages différentiels et la sortie de cet étage, avec les signaux mélangés, est prise sur le collecteur du transistor T6 (ces transistors constituent aussi une charge active pour les étages différentiels). Cette sortie est reliée à la base du transistor d'attaque T15 dont le collecteur est à la masse et dont l'émetteur est relié d'une part à une source de courant de polarisation 72 (alimentée par exemple par le conducteur 54) et d'autre part à la base du transistor T16. Le collecteur du transistor T16 est relié à la ligne téléphonique (borne 14) et son émetteur (qui constitue la sortie du circuit reliée à l'entrée de l'amplificateur 32 de l'écouteur), est relié d'une part à une source de courant de polarisation 74 reliée par ailleurs à la masse et d'autre part aux bases des transistors T2 et T4 pour constituer la contre réaction déjà mentionnée par laquelle un gain global fixe est assuré quelles que soient les proportions du mélange effectué par le circuit. Autrement dit, les gains des deux signaux mélangés sont proportionnels respectivement à un facteur x et un facteur 1—x grâce à cette contre-réaction de la sortie du circuit vers les entrées des étages différentiels.

Les gains respectifs x et 1—x sont établis par le déséquilibre des courants alimentant le premier et le second étage différentiel, donc à partir des courants circulant dans les transistors T7 et T9.

Comme ces transistors recopient les courants des transistors T8 et T10 respectivement (bases communes et émetteurs communs pour T7 et T8 d'une part, T9 et T10 d'autre part), le déséquilibre des courants se retrouve dans les transistors T8 et T10. Ces transistors sont montés en diode (base et collecteur réunis) et constituent les charges du troisième étage différentiel. Leurs émetteurs sont reliés au conducteur 54, et leurs collecteurs sont reliés respectivement au collecteur du transistor T11 et au collecteur du transistor T12.

Les émetteurs de ces deux derniers transistors sont réunis et reliés à une source de courant 76 connectée par ailleurs à la borne de masse 16.

Les bases des transistors T11 et T12 sont polarisées à partir du conducteur 54 par des diodes respectives T13 et T14 (transistors montés en diode). Ces diodes sont polarisées en direct et servent à linéariser le gain de l'étage différentiel de commande constitué par les transistors T11 et T12. Enfin, les bases des transistors T11 et T12 sont reliées à des sources de courant de commande représentées symboliquement sous les références 78 et 80, qui fournissent des courants de commande en fonction d'une information représentant l'impédance de la ligne.

A titre d'exemple, le poste téléphonique comprend, dans une partie du circuit non représentée car elle ne fait pas partie du circuit de l'invention, une diode Zener (en courant continu) constituée à partir d'un transistor dont on peut recopier le courant pour constituer la source 78 de la figure 6. On peut aussi traiter différemment le courant recopié pour constituer la source 78. Cette diode Zener est connectée entre les bornes 14 et 16 et le courant continu consommé par la diode Zener, donc aussi le courant recopié, est une bonne indication de l'impédance et de la longueur de la ligne.

La source 80 peut être une source fournissant un courant constant, éventuellement réglable.

Pour une ligne ayant la plus grande longueur possible, le courant de la source 78 est très faible devant celui de la source 80. La diode T13 est moins conductrice que la diode T14. Les potentiels de base des transistors T11 et T12 sont déséquilibrés et le transistor T11 conduit beaucoup plus que le transistor T12. Ce déséquilibre se répercute sur les transistors T8 et T10 puis sur les transistors T7 et T9 qui alimentent le premier et le second étage différentiel. Le gain de ces étages est proportionnel au courant qui les traverse. Les gains sont donc aussi déséquilibrés et, par conséquent, les signaux appliqués sur les bases des transistors T1 et T3 sont amplifiés avec des gains très différents et mélangés dans l'étage de polarisation commun.

Or le transistor T1 reçoit le signal de microphone (inversé) et le signal composite de la ligne téléphonique après passage dans l'impédance 36, ces signaux étant additionnés sur la base grâce à la résistance 68. De même, le transistor T3 reçoit sur sa base le signal de microphone (inversé) et le signal composite de la ligne après passage dans l'impédance 34, les signaux étant additionnés sur la base grâce à la résistance 66.

Ainsi, dans le cas d'une ligne téléphonique longue, le mélange de signaux est très déséquilibré en faveur du premier étage différentiel et il correspond à un passage de signal pratiquement uniquement à travers l'impédance de compensation 36 correspondant justement à la compensation pour une ligne longue.

Réciproquement, si la ligne était très courte, la source de courant 78 serait plus importante que la source 80 et le déséquilibre serait dans l'autre sens : passage de signal uniquement à travers l'impédance de compensation 34 correspondant justement à la compensation pour une ligne courte.

Pour des longueurs intermédiaires, le mélange s'effectue en proportion de ces longueurs.

On reconnaît donc bien dans le circuit de la figure 6 les diverses fonctions mentionnées à propos de la figure 3.

L'homme de l'art pourra s'inspirer de ce circuit pour réaliser un circuit correspondant plus particulièrement au schéma bloc de la figure 4 ou de la figure 5, ou encore d'autres montages, comme par exemple un montage en pont d'impédances : des montages en pont ont déjà été proposés pour servir de circuit antilocal, la ligne téléphonique elle-même constituant une branche du pont ; dans ce cas, une autre branche du pont comprend une impédance qui équilibre l'impédance de la ligne ; au lieu de prévoir une seule impédance d'adaptation, ou deux impédances commutables (l'une pour une ligne longue, l'autre pour une ligne courte), ou une pluralité d'impédances commutables, on prévoit selon l'invention deux impédances correspondant respectivement à une adaptation à une ligne longue et à une adaptation à une ligne courte et un mélangeur de signaux qui injecte dans le pont un mélange des signaux circulant dans ces impédances, la proportion du mélange étant commandée par un signal (courant continu) représentatif de l'impédance de la ligne.

De manière générale, on n'a pas représenté dans les figures les éléments de circuit qui n'ont rien à voir avec l'invention (pont de diodes, protection, etc.).

**Revendications**

1. Circuit de suppression de signal de microphone, pour un poste téléphonique comprenant un amplificateur de microphone (22) fournissant un signal de microphone (M) vers un amplificateur de ligne (24) qui émet ce signal sur une ligne téléphonique, un amplificateur (32) d'écouteur fournissant un signal à un écouteur (20), un circuit de suppression de signal de microphone recevant d'une part le signal de microphone (M) et d'autre part un signal composite (S) provenant de la ligne, pour fournir à l'écouteur du poste un signal correspondant essentiellement au signal composite (S) dont on a retranché le signal de microphone (M), et deux impédances de compensation (34, 36, fig. 3 ; 46, 48, fig. 4) différentes destinées à effectuer l'une une adaptation d'impédance pour une ligne téléphonique courte et l'autre une adaptation pour une ligne téléphonique longue, caractérisé en ce qu'il comporte :

un mélangeur de signaux (42, fig. 3, 50, fig. 4) relié aux deux impédances de compensation pour mélanger des signaux modifiés par ces deux impédances avec des proportions variables commandées,

un circuit de commande (44, fig. 3, 52, fig. 4) recevant un signal représentatif de l'impédance de la ligne téléphonique, pour contrôler les proportions du mélange des deux signaux en fonction de l'impédance de la ligne,

et un moyen d'addition ou soustraction (38, 40, fig. 3 ; 30, fig. 4) recevant le signal composite (S) et le signal de microphone (M), l'un des deux au moins étant modifié par chacune des impédances de compensation (34, 36, fig. 3 ; 46, 48, fig. 4).

2. Circuit selon la revendication 1, caractérisé en ce que les impédances de compensation (34, 36) sont reliées chacune entre un conducteur (10) de la ligne téléphonique et une entrée d'un soustracteur ou additionneur respectif (38, 40) dont les autres entrées reçoivent le signal de microphone (M) et dont les sorties sont appliquées au mélangeur (42).

3. Circuit selon la revendication 2, caractérisé en ce que le signal de microphone est appliqué à deux adaptateurs d'impédance (58, 60) dont les sorties sont reliées à des résistances (66, 68) auxquelles sont reliées aussi les impédances de compensation (34, 36).

4. Circuit selon la revendication 2, caractérisé en ce que le mélangeur comprend un premier et un second étage différentiel (T1, T2 ; T3, T4) et un étage de polarisation commun (T5, T6) sur lequel est prélevé un signal mélangé, et des sources de courant commandées (T7, T9) pour alimenter les deux étages différentiels.

5. Circuit selon la revendication 4, caractérisé en ce que le circuit de commande des proportions du mélange comprend un troisième étage différentiel (T11, T12) commandé de manière à déséquilibrer les sources de courant alimentant le premier et le second étage différentiel.

6. Circuit selon l'une des revendications 1 à 4, caractérisé en ce que le circuit de commande des proportions du mélange reçoit un signal fonction du courant continu consommé par la ligne téléphonique.

7. Circuit selon la revendication 1, caractérisé en ce que les impédances de compensation (46, 48) sont reliées chacune entre la sortie de l'amplificateur de microphone (22) et une entrée respective du mélangeur (50) dont la sortie est appliquée à une entrée d'un soustracteur ou additionneur (30) dont une autre entrée est reliée à la ligne téléphonique et dont la sortie est reliée à l'amplificateur d'écouteur.

8. Circuit selon la revendication 1, caractérisé en ce que l'amplificateur du microphone possède des sorties indépendantes, deux de ces sorties fournissant un signal en courant, et étant reliées aux entrées du mélangeur (50'), les impédances de compensation (46', 48') étant reliées chacune entre une sortie de l'amplificateur de microphone et une borne de masse (16).

## Claims

1. Circuit for the suppression of the microphone signal, in a telephone station comprising a microphone amplifier (2) providing a microphone signal (M) to a line amplifier (24) transmitting this signal on a telephone line, a loudspeaker amplifier (32) providing a signal to a loudspeaker (20), a circuit for the suppression of the microphone signal receiving, on the one hand, the microphone signal (M) and, on the other hand, a composite signal (S) originating from the line, to supply the loudspeaker of the station with a signal substantially corresponding to the composite signal (S) wherein the microphone signal (M) has been eliminated, and two compensation impedances (34, 36, Fig. 3 ; 46, 48, Fig. 4) which are different and are susceptible to provide an impedance adaptation for a short telephone line in case of the first and an adaptation for a long telephone line in case of the second one, characterized in that it comprises :
a signal mixer (42, Fig. 3, 50, Fig. 4) connected to the two compensation impedances to mix the signals modified by these two impedances with variable controlled proportions,
a control circuit (44, Fig. 3, 52, Fig. 4) receiving a signal representative of the impedance of the telephone line to control the mixing proportions of the two signals in function of the line impedance,
and adding or subtraction means (38, 40, Fig. 3 ; 30, Fig. 4) receiving the composite signal (S) and the microphone signal (M), at least one of these two signals being modified by each of the compensation impedances (34, 36, Fig. 3 ; 46, 48, Fig. 4).

2. Circuit according to claim 1, characterized in that the compensation impendances (34, 36) are each connected between a conductor (10) of the telephone line and an input of a respective subtractor or adder (38, 40) the other inputs of which receive the microphone signal (M) and the outputs of which are connected to the mixer (42).

3. Circuit according to claim 2, characterized in that the microphone signal is applied to two impedance adapters (58, 60) the outputs of which are connected to resistors (66, 68) whereto the compensation impedances (34, 36) are likewise connected.

4. Circuit according to claim 2, characterized in that the mixer comprises a first and a second differential stage (T1, T2 ; T3, T4) and a common polarization stage (T5, T6) whereon a mixed signal is derived, and controlled current sources (T7, T9) to supply the two differential stages.

5. Circuit according to claim 4, characterized in that the circuit for controlling the mixing proportions comprises a third differential stage (T11, T12) controlled in a manner to unbalance the current sources supplying the first and second differential stages.

6. Circuit according to any of claims 1 to 4, characterized in that the circuit for controlling the mixing proportions receives a signal which is a function of the direct current consumed by the telephone line.

7. Circuit according to claim 1, characterized in that the compensation impedances (46, 48) are each connected between the output of the microphone amplifier (22) and a respective input of the mixer (50) the output of which is applied to an input of a subtractor or adder (30) a further input of which is connected to the telephone line and the output of which is connected to the loudspeaker amplifier.

8. Circuit according to claim 1, characterized in that the microphone amplifier has independent outputs, two of these outputs supplying a current signal, and being connected to the inputs of the mixer (50'), the compensation impedances (46', 48') being each connected between an output of the microphone amplifier and a ground terminal (16).

## Patentansprüche

1. Schaltung zur Unterdrückung des Mikrophonsignals, für eine Telephonstelle, mit einem Mikrophon-Verstärker (22), welcher ein Mikrophonsignal (M) zu einem Leitungsverstärker (24) liefert und dieses Signal auf einer Telphonleitung aussendet, mit einem Hörer-Verstärker (32), welcher ein Hörsignal (20) liefert, wobei eine Schaltung zur Unterdrückung des Mikrophonsignals einerseits das Mikrophonsignal (M) und andererseits ein zusammengesetztes, von der Leitung kommendes Signal (S) empfängt, um dem Hörer der Stelle ein Signal zu liefern, welches im wesentlichen dem zusammengesetzten Signal (S) entspricht, aus dem das Mikrophonsignal (M) entfernt wurde, und zwei Kompensationsimpedanzen (34, 36, Fig. 3 ; 46, 48, Fig. 4), die voneinander verschieden und dazu bestimmt sind, eine Impedanzanpassung für eine kurze bzw. die andere eine Impedanzanpassung für eine lange Telephonleitung vorzunehmen, dadurch gekennzeichnet, daß sie umfaßt :

einen Signalmischer (42, Fig. 3, 50, Fig. 4), der an die zwei Kompensationsimpedanzen angeschlossen ist, um Signale zu mischen, welche durch diese zwei Impedanzen verändert wurde, mit gesteuerten variablen Proportionen,

eine Steuerschaltung (44, Fig. 3, 52, Fig. 4), welche ein Signal empfängt, das repräsentativ für die Impedanz der Telephonleitung ist, um die Mischproportionen für die zwei Signale in Abhängigkeit von der Leitungsimpedanz zu steuern,

und eine Addier- oder Subtrahier-Einrichtung (28, 40, Fig. 3 ; 30, Fig. 4), die das zusammengesetzte Signal (S) und das Mikrophonsignal (M) empfängt, von denen wenigstens das eine durch jede der Kompensationsimpedanzen (34, 36, Fig. 3 ; 46, 48, Fig. 4) verändert wurde.

2. Schaltung nach Anspruch 1, dadurch gekennzeichnet, daß die Kompensationsimpedanzen (34, 36) jeweils zwischen einen Leiter (10) der Telephonleitung und einen Eingang eines entsprechenden Subtrahierers oder Addierers (38, 40) geschaltet sind, dessen andere Eingänge das Mikrophonsignal (M) empfangen und dessen Ausgänge an den Mischer (42) angelegt sind.

3. Schaltung nach Anspruch 2, dadurch gekennzeichnet, daß das Mikrophonsignal an zwei Impedanzadapter (58, 60) angelegt ist, deren Ausgänge mit Widerständen (66, 68) verbunden sind, an welche ferner die Kompensationsimpedanzen (34, 36) angeschlossen sind.

4. Schaltung nach Anspruch 2, dadurch gekennzeichnet, daß der Mischer eine erste und eine zweite differentielle Stufe (T1, T2 ; T3, T4) und eine gemeinsame Polarisationsstufe (T5, T6) umfaßt, an welcher das gemischte Signal abgenommen wird, sowie gesteuerte Stromquellen (T7, T9) umfaßt, um die zwei differentiellen Stufen zu versorgen.

5. Schaltung nach Anspruch 4, dadurch gekennzeichnet, daß die Schaltung zur Steuerung der Mischproportionen eine dritte differentielle Stufe (T11, T12) umfaßt, die derart gesteuert wird, daß die Stromquellen, welche die erste und die zweite differentielle Stufe speisen, aus dem Gleichgewichtszustand gebracht werden.

6. Schaltung nach einem der Ansprüche 1 bis 4, dadurch gekennzeichnet, daß die Schaltung für die Steuerung der Mischproportionen ein Signal empfängt, das von dem Gleichstrom abhängt, welchen die Telephonleitung verbraucht.

7. Schaltung nach Anspruch 1, dadurch gekennzeichnet, daß die Kompensationsimpedanzen (46, 48) jeweils zwischen den Ausgang des Mikrophonverstärkers (22) und einen entsprechenden Eingang des Mischers (50) geschaltet sind, dessen Ausgang an einen Eingang eines Subtrahierers oder Addierers (30) angelegt ist, wovon ein weiterer Eingang mit der Telephonleitung verbunden und der Ausgang an einen Hörer-Verstärker angeschlossen ist.

8. Schaltung nach Anspruch 1, dadurch gekennzeichnet, daß der Verstärker des Mikrophons voneinander unabhängige Ausgänge besitzt, wobei zwei dieser Ausgänge ein Stromsignal liefern, und mit den Eingängen des Mischers (50') verbunden sind, wobei die Kompensationsimpedanzen (46', 48') jeweils zwischen einen Ausgang des Mikrophon-Verstärkers und einen Masseanschluß (16) geschaltet sind.

Fig.1

Fig.2

Fig.3

Fig.4

Fig.5

Fig.6

0 114 558